# EUROPEAN PATENT SPECIFICATION

(11) **EP 2 927 358 B1**
(45) Date of publication and mention of the grant of the patent: **24.06.2020**
(21) Application number: 13858120.2
(22) Date of filing: 24.10.2013
(51) Int. Cl.: B60R 19/03, D03D 1/00, D03D 13/00, B32B 5/02, B32B 5/06, B32B 5/22, B32B 5/26, B32B 1/08

(54) **TUBULAR FIBER STRUCTURE AND FIBER REINFORCED COMPOSITE MATERIAL**
ROHRFÖRMIGE FASERSTRUKTUR UND FASERVERSTÄRKTES VERBUNDMATERIAL
STRUCTURE DE FIBRE TUBULAIRE ET MATÉRIAU COMPOSITE RENFORCÉ DE FIBRE

(30) Priority: 29.11.2012 JP 2012261056
(43) Date of publication of application: 07.10.2015
(73) Proprietor: Kabushiki Kaisha Toyota Jidoshokki, Kariya-shi, Aichi 448-8671 (JP)
(72) Inventor: HORI, Fujio, Kariya-shi Aichi 448-8671 (JP); KAMIYA, Ryuta, Kariya-shi Aichi 448-8671 (JP)
(74) Representative: TBK
(86) International application number: PCT/JP2013/078764
(87) International publication number: WO 2014/083975

(56) References cited:
- EP-A1- 2 923 128
- JP-A- H04 108 138
- JP-A- S62 244 620
- JP-A- 2002 187 204
- JP-A- 2005 271 875
- JP-A- 2009 191 092
- JP-B2- 4 316 802
- JP-U- S55 159 121
- JP-U- S55 159 121

## Description

### TECHNICAL FIELD

The technology of the present disclosure relates to a tubular fiber structure and a fiber reinforced composite material that uses the tubular fiber structure as a reinforcement.

### BACKGROUND ART

A typical automobile includes bumpers secured to the front and rear of the vehicle body to absorb impact energy of a collision and protect the vehicle body and the vehicle occupants during a collision. A bumper needs to absorb, in an irreversible manner, the energy of the load that is produced when the automobile collides with an obstacle. There are structures that support the bumper with a substantially tubular energy absorption member formed from fiber-reinforced plastic to increase energy absorption.

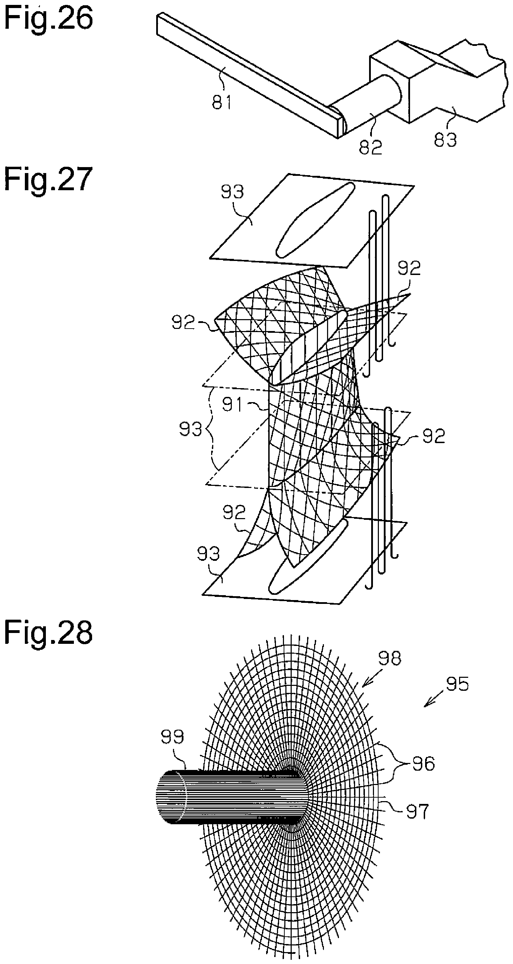

In such a case, as shown in Fig. 26, a bumper beam 81 needs to be supported through a tubular energy absorption member 82 by a frame body 83. Since the energy absorption member 82 does not have a flange, the two ends of the energy absorption member 82 are coupled to the bumper beam 81 and the frame body 83 with a complicated structure.

Patent document 1 discloses an example of a ceramic group composite member that includes flanges on two ends of a tube. The ceramic group composite member is formed from ceramic fibers and serves as a ceramic group composite member applied to a turbine vane. As shown in Fig. 27, the ceramic fiber reinforcement member used as the ceramic group composite member includes spread portions 92 and plain weave plates 93. The spread portions 92 are formed by cutting slits in the two ends of a tubular vane 91, which is formed by a three-axis braid texture, and bending the cut ends. The plain weave plates 93 of ceramic fibers hold the spread portions 92. In this manner, the ceramic group composite member includes flanges at the two ends of a tube.

Patent document 2 discloses a rotor, which is formed from a composite material and includes a cylindrical tube projecting from an inner circumference of a toroidal disk-shaped main body, and a disk-shaped fabric used as a reinforcement for the rotor. As shown in Fig. 28, a disk-shaped fabric 95 includes radial threads 96, which extend radially from the center of the disk-shaped fabric 95, and circumferential threads 97, which extend spirally (helically) around the center. The radial threads 96 and the circumferential threads 97 form a disk-shaped main body 98. The circumferential threads 97 are not woven at the central portion of the disk-shaped fabric 95 so that an opening is formed at the central portion. The radial threads 96 form a long extension 99 that projects from the circumference of the opening. A plurality of the disk-shaped fabrics 95 are stacked and impregnated with a resin to form the composite material rotor.

### PRIOR ART DOCUMENT

### PATENT DOCUMENTS

Patent Document 1: Japanese Laid-Open Patent Publication No. 2003-148105 Patent Document 2: Japanese Laid-Open Patent Publication No. 2-234944

### SUMMARY OF THE INVENTION

### PROBLEMS THAT ARE TO BE SOLVED BY THE INVENTION

When applying the structure of patent document 1 to an energy absorption member, the coupling of the energy absorption member to the bumper beam 81 and the frame body 83 at the flanges simplifies the coupling structure. However, in the structure of patent document 1, the slits are cut into the two ends of the tube, which is formed by a three-axis braid texture, and the cut ends are bent to form the flanges. Thus, when using the structure of patent document 1 as a reinforcement for fiber-reinforced plastic to form the energy absorption member, cracks may form from the slits and lower the energy absorption efficiency. Further, when increasing the amount of the axial threads to counter compression in the three-axis braid texture, undulations (crimps) increase in the radial threads. This lowers the strength.

When using the disk-shaped fabric 95 of patent document 2 to form an energy absorption member having a flange at one side, disk-shaped fabrics 95 having central openings with different diameters are stacked in layers to form the tube. This results in a complicated manufacturing process. Further, the threads serving as the reinforcement fibers of the tube are in a free state. Thus, when manufacturing a composite material, it is difficult to lay out the threads, and it is difficult to increase the strength.

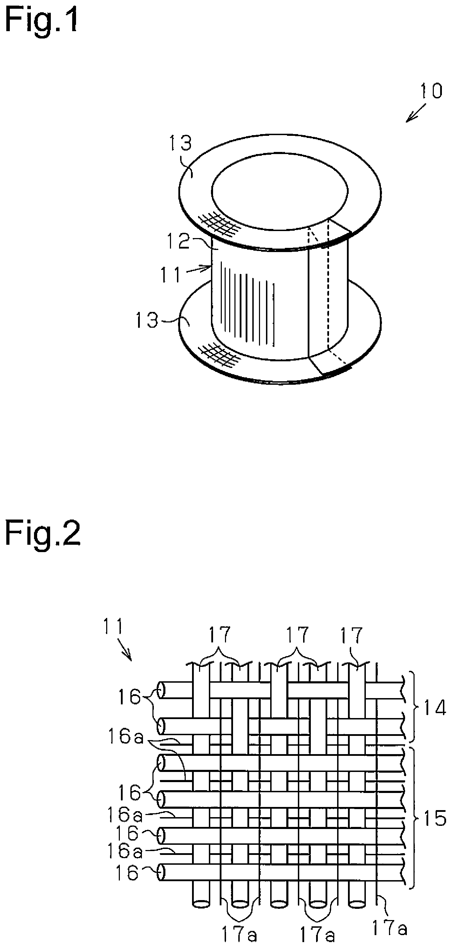

JP S55 159121 U discloses a flange structure object made from a fiber reinforced composite material which consists of a cylindrical part 1 and a neck 2. An example of a flange structure manufacturing method is disclosed in fig. 2. At ends of the fiber material breaks are formed to enable the reinforcement section 5 of neck 2. After twisting the fiber material around a roll, the neck is formed by forming the upper part. The cylindrical part and the neck consist of a continuous structure which is in axial direction of the cylindrical part and in outside direction of the neck. Furthermore, the reinforcement section of the neck is a continuous structure which is in axial direction in the cylindrical part and in outside direction of the neck. The base material may by textile fabrics or a nonwoven fabric or a reinforcing fiber.

It is an object of the present disclosure to provide a tubular fiber structure that includes a flange and obtains the necessary strength when used as reinforcement for tubular fiber-reinforced composite material to facilitate coupling to another member. It is also on object of the present disclosure to provide a fiber reinforced composite material that uses the tubular fiber structure as the reinforcement.

### MEANS FOR SOLVING THE PROBLEM

The object is solved by the features defined in claim 1.

One aspect of the present disclosure is a tubular fiber structure including a tube and a flange located on at least one side of the tube. The tubular fiber structure is formed by shaping a fabric base material that is rolled. Here, the "fabric base material" is formed by threads laid out to extend in at least two directions and includes at least a portion that is woven from threads (interweaved portion). In the present description, "threads" are not limited to twisted fiber bundles and include non-twisted fiber bundles.

In this structure, the tubular fiber structure includes the flange that is shaped at the region of the end of the rolled fabric base material. Thus, the formation of cracks from the boundary of the flange and the tube is limited when forming a composite material. This differs from when cutting slits into the region at the end of a tubular braid texture. Further, the tubular fiber structure is entirely formed by a fabric base material. Thus, compared to when threads serving as reinforcement fibers of a tube are free, the threads may be laid out in an orderly manner when manufacturing a composite material. Accordingly, when the tubular fiber structure, which includes the flange, is used as a reinforcement for a tubular fiber reinforced composite material that can easily be coupled to another member, the necessary strength may be ensured.

A fiber reinforced composite material according to one embodiment of the present disclosure includes the tubular fiber structure of the present disclosure as a reinforcement.

### BRIEF DESCRIPTION OF THE DRAWINGS

Fig. 1 is a schematic perspective view showing a tubular fiber structure of a first embodiment.
Fig. 2 is a schematic plan view showing the woven texture of a fabric base material that forms the tubular fiber structure of Fig. 1.
Fig. 3A is a schematic view showing a portion, cut out from a roll, of the fabric base material that forms the tubular fiber structure of Fig. 1, Fig. 3B is a schematic diagram of the cut-out fabric base material, and Fig. 3C is a partially enlarged plan view of Fig. 3C.
Fig. 4A is a schematic plan view of a jig used to shape the fabric base material of Fig. 3, and Fig. 4B is a schematic perspective view showing the shaping of the flange in the tubular fiber structure of Fig. 1.
Fig. 5 is a schematic perspective view showing a tubular fiber structure of a second embodiment.
Fig. 6A is a schematic view showing a portion, cut out from a roll, of a fabric base material forming the tubular fiber structure of Fig. 5, and Fig. 6B is a schematic view of the cut-out fabric base material.
Fig. 7A is a cross-sectional view of a jig used to shape the fabric base material of Fig. 6, and Fig. 7B is a schematic cross-sectional view showing the relationship of the jig and the fabric base material when forming the tubular fiber structure of Fig. 5.
Fig. 8 is a schematic perspective view showing a tubular fiber structure of a third embodiment.
Fig. 9 is a schematic view showing the relationship of stitching threads and fiber bundles, which are overlapped in a thicknesswise direction of the tube in the tubular fiber structure of Fig. 8.
Fig. 10 is a schematic perspective view showing the tube of the tubular fiber structure of Fig. 8 when stitched with stitching wires.
Fig. 11A is a schematic view showing a fabric base material in a fourth embodiment when a portion cut out from a roll is a second fabric base material in which the reinforcement fibers are laid out at an angle of ±45 degrees, and Fig. 11B is a schematic view of the cut-out fabric base material.
Fig. 12A is a schematic view showing a fabric base material in the fourth embodiment when a portion cut out from a roll is a first fabric base material in which the reinforcement fibers are laid out at an angle of 0 degrees and 90 degrees, and Fig. 12B is a schematic view of the cut-out fabric base material.
Fig. 13 is a schematic perspective view showing a tubular fiber structure of a fifth embodiment.
Fig. 14A is a schematic view showing the tubular fiber structure of Fig. 13 when a portion cut out from a roll is a first fabric base material in which the reinforcement fibers are laid out at an angle of 0 degrees and 90 degrees, and Fig. 14B is a schematic view of the cut-out fabric base material.
Fig. 15A is a schematic view showing the tubular fiber structure of Fig. 13 when a portion cut out from a roll is a second fabric base material in which the reinforcement fibers are laid out at an angle of ±45 degrees, and Fig. 15B is a schematic view of the cut-out fabric base material.
Fig. 16 is a graph showing the relationship of load and displacement when the tubular fiber structure of Fig. 13 is applied to an energy absorption member.
Fig. 17 is a schematic view showing a flange-corresponding portion in a fabric base material of a further embodiment.
Fig. 18 is a schematic perspective view showing a tubular fiber structure of a further embodiment.
Fig. 19 is a schematic perspective view showing a tubular fiber structure of a further embodiment.
Fig. 20 is a schematic perspective view showing a tubular fiber structure of a further embodiment.
Fig. 21A is a schematic perspective view showing a tubular fiber structure of a further embodiment, and Fig. 21B is a schematic perspective view showing the fabric base material of Fig. 21A.
Fig. 22 is a schematic view showing a fabric base material of a further embodiment.
Figs. 23A and 23B are schematic views showing a tubular fiber structure of a further embodiment.
Figs. 24A and 24B are schematic views showing a tubular fiber structure of a further embodiment.
Fig. 25 is a schematic view showing a lock stitch in a further embodiment.
Fig. 26 is a schematic perspective view showing a coupled energy absorption member.
Fig. 27 is a schematic perspective view of the prior art.
Fig. 28 is a schematic perspective view showing further prior art.

### EMBODIMENTS OF THE INVENTION

### First Embodiment

A first embodiment of a tubular fiber structure will now be described with reference to Figs. 1 to 4.

Referring to Fig. 1, a tubular fiber structure 10 is formed by rolling a sheet of a fabric base material 11 and shaping the rolled fabric base material 11. The tubular fiber structure 10 includes a tube 12 and a flange 13, which is located on at least one side (i.e., one axial end) of the tube 12. In this embodiment, the tube 12, which is tubular and has a circular cross-section, includes the flange 13 at two sides (two axial ends). The "fabric base material" is formed by threads laid out to extend in at least two directions and includes at least a portion that is woven from threads (interweaved portion).

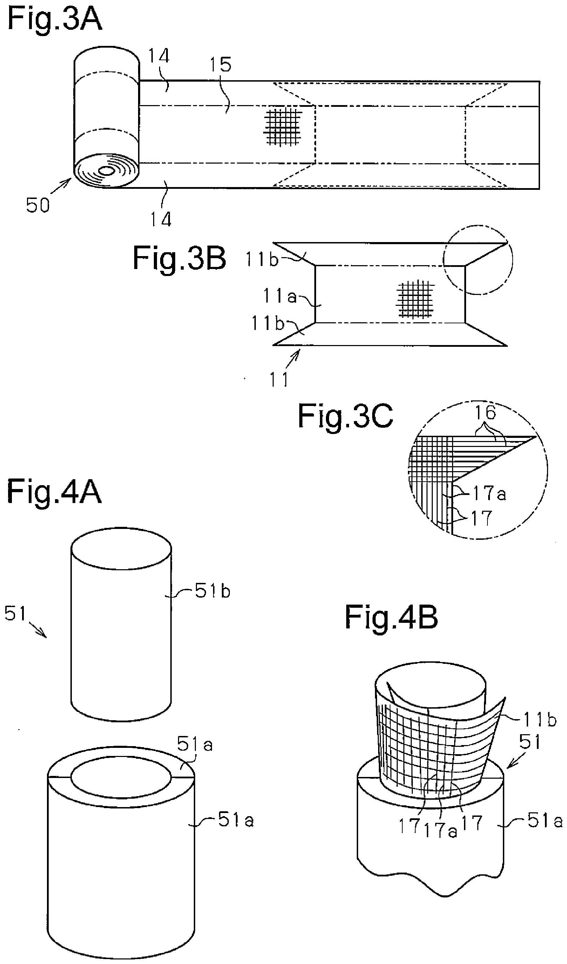

Referring to Fig. 2, the fabric base material 11 includes a woven texture 14 and a non-woven texture 15. As shown in Fig. 3A, the fabric base material 11 of this embodiment includes the woven texture 14 at the two widthwise sides of the fabric base material 11 and the non-woven texture 15 at the middle region in the widthwise direction between the two woven textures 14. The woven textures 14 each have a predetermined width corresponding to the width of the flanges 13 in the radial direction. The non-woven texture 15 has a predetermined width corresponding to the axial length of the tube 12. That is, the tube 12 of the tubular fiber structure 10 is formed by the non-woven texture 15, and the flanges 13 of the tubular fiber structure 10 are formed by the woven textures 14. The woven textures 14 are formed by laying out threads (fiber bundles), which function as reinforcement fibers of a composite material, to extend in at least two directions, with intersections of threads extending in different directions defining woven portions (interweaved portion).

In detail, as shown in Fig. 2, the fabric base material 11 includes reinforcement threads 16, which are laid out at an angle of 0 degrees, reinforcement threads 17, which are laid out at an angle of 90 degrees, auxiliary threads 16a, which are laid out at an angle of 0 degrees, and auxiliary threads 17a, which are laid out at an angle of 90 degrees. The layout angle of a thread is the angle of the direction the thread extends relative to the longitudinal direction of the fabric base material 11. The layout angle of 0 degrees indicates that the thread extends in a direction parallel to the longitudinal direction of the fabric base material 11. The layout angle of 90 degrees indicates that the thread extends in a direction perpendicular to the longitudinal direction of the fabric base material 11. That is, the warps of the fabric are the threads laid out at 0 degrees, and the wefts are the threads laid out at 90 degrees.

The portions of the reinforcement threads 16 and the reinforcement threads 17 corresponding to the flanges 13 form the woven textures 14. The portions of the reinforcement threads 16 and the reinforcement threads 17 corresponding to the tube 12 form the non-woven texture 15. The woven texture 14 forms a plain weave. In the portions of the reinforcement threads 16 and the reinforcement threads 17 corresponding to the tube 12, the reinforcement threads 16 are all laid out along the same plane at the same side of the reinforcement threads 17, and the reinforcement threads 17 are all laid out along the same plane at the same side of the reinforcement threads 16. In Fig. 2, the reinforcement threads 16 are laid out at the upper side of the reinforcement threads 17.

The auxiliary threads 16a are laid out adjacent to the reinforcement threads 16 in a portion corresponding to the tube 12. The auxiliary threads 17a are laid out adjacent to the reinforcement threads 17 in a portion corresponding to the tube 12 and also extend to portions corresponding to the flanges 13. The auxiliary threads 16a are laid out to alternately form woven portions (interweaved portions) with the reinforcement threads 17 and the auxiliary threads 17a. The auxiliary threads 17a are laid out to form woven portions (interweaved portions) with the reinforcement threads 16 in portions corresponding to the flanges 13 and alternately form woven portions (interweaved portions) with the reinforcement threads 16 and the auxiliary threads 16a in portions corresponding to the tube 12. Thus, although the reinforcement threads 16 and the reinforcement threads 17 that form the tube 12 do not form woven portions (interweaved portions) with each other in the tube 12, the auxiliary threads 16a alternately form woven portions (interweaved portions) with the reinforcement threads 17 and the auxiliary threads 17a, and the auxiliary threads 17a alternately form woven portions (interweaved portions) with the reinforcement threads 16 and the auxiliary threads 16a. Thus, the reinforcement threads 16 and the reinforcement threads 17 are held at predetermined positions.

The threads (fiber bundles) forming the fabric base material 11 are selected in accordance with the required performance and may be, for example, inorganic fibers such as carbon fibers, glass fibers, ceramic fibers, or metal fibers, or may be organic fibers having high strength. Organic fibers including high strength may be aramid fibers, poly-p-phenylene benzo bis-oxazole fibers, polyallylate fibers, ultra-high molecular weight polyethylene fibers, or the like. Carbon fibers are preferred when the fiber reinforced composite material requires, for example, high rigidity and high strength. The use of glass fibers in the fiber bundles lowers costs.

A method for manufacturing the tubular fiber structure 10 will now be described.

First, referring to Fig. 3A, the fabric base material 11 is cut out from a roll 50 including the woven textures 14 at the two widthwise sides. As shown in Fig. 3B, the fabric base material 11 includes a tetragonal tube-corresponding portion 11a and trapezoidal flange-corresponding portions 11b, which are formed continuously with the two widthwise sides of the tube-corresponding portion 11a. Triangular portions are located at the two ends of each flange-corresponding portion 11b. As shown in Fig. 3C, wefts are eliminated from the triangular portions leaving only the warps. The wefts of the flange-corresponding portions 11b refer to the reinforcement threads 17 and the auxiliary threads 17a laid out at an angle of 90 degrees, and the warps of the flange-corresponding portions 11b refer to the reinforcement threads 16 laid out at an angle of 0 degrees.

Fig. 4A shows a shaping jig 51 (shaping mold) used to roll the fabric base material 11 and shape the flanges 13. The jig 51 (shaping mold) includes a tube-shaped outer jig 51a, which is separable into two pieces, and a bar-shaped inner jig 51b, which is able to hold the fabric base material 11 in cooperation with the outer jig 51a. The outer jig 51a has an inner diameter corresponding to the outer diameter of the tubular fiber structure 10. The inner jig 51b has an outer diameter corresponding to the inner diameter of the tubular fiber structure 10.

The jig 51 is used to roll the fabric base material 11 into a tubular form and shape the flanges 13.

The tube-corresponding portion 11a of the fabric base material 11 is first rolled around the outer side of the inner jig 51b. Here, the flange-corresponding portions 11b project from the two ends of the inner jig 51b. Then, the outer jig 51a is fitted onto the outer side of the tube-corresponding portion 11a of the fabric base material 11, which is rolled around the inner jig 51b. When the tube-corresponding portions 11a are held between the inner jig 51b and the outer jig 51a, the jig 51 is held by a support device (not shown). The support device supports the inner jig 51b at a recess (not shown) formed in an end surface of the inner jig 51b and supports the outer jig 51a from an outer side.

As shown in Fig. 4B, the flange-corresponding portions 11b of the fabric base material 11 held by the jig 51 undergo shaping. The shaping of the flange-corresponding portion 11b is first performed by, for example, using a manipulator to bend the flange-corresponding portion 11b projecting from one end of the jig 51 while widening the intervals of the reinforcement threads 17 and the auxiliary threads 17a that form the flange-corresponding portion 11b toward outer sides in the radial direction. The overlapping sections of the flange-corresponding portion 11b (overlapping sections of the fabric base material 11) that has undergone shaping are fixed by an adhesive agent or by stitches. Then, the flange-corresponding portion 11b projecting from the other end of the jig 51 is also shaped in the same manner, and the overlapping sections of the flange-corresponding portion 11b that has undergone shaping are fixed by an adhesive agent or by stitches. This completes the manufacturing of the tubular fiber structure 10.

The tubular fiber structure 10, which is formed as described above, is used as a reinforcement for a fiber reinforced composite material. The tubular fiber structure 10 is, for example, impregnated with a matrix resin and hardened in an RTM process to form a fiber reinforced composite material. More specifically, the tubular fiber structure 10, removed from the outer jig 51a and the inner jig 51b, is accommodated in a cavity of a mold. Then, the cavity is closed, and the cavity is depressurized. After the cavity becomes almost vacuum, the cavity is filled with uncured thermosetting resin. Then, the resin is heated and cured to manufacture the fiber reinforced composite material. The thermosetting resin may be unsaturated polyester resin, epoxy resin, phenol resin, or the like.

This embodiment has the advantages described below.
(1) The tubular fiber structure 10 is formed by rolling a sheet of the fabric base material 11 and shaping the rolled fabric base material 11 so that at least one side of the tube 12 includes the flange 13. This differs from when forming a flange by cutting slits into a tubular braid texture in that cracks do not form from the boundary of the flange 13 and the tube 12 when forming a composite material. Further, the tubular fiber structure 10 is entirely formed by the fabric base material 11. Thus, compared to when the threads forming a tube of a fiber reinforced composite material are free, the threads may be laid out in an orderly manner when manufacturing a composite material. Accordingly, when the tubular fiber structure 10, which includes flanges, is used as a reinforcement for a fiber reinforced composite material that can easily be coupled to another member, the necessary strength may be ensured.
(2) The flanges 13 are formed by the woven texture 14, and the tube 12 is formed by the non-woven texture 15. Thus, the reinforcement fibers (reinforcement threads 16 and 17) forming the tube 12 do not include crimps. Accordingly, when the tubular fiber structure 10 is used to form a composite material, the composite material has higher strength and rigidity than when the flanges 13 and the tube 12 are both formed by the woven texture 14.
(3) The tubular fiber structure 10 includes the flanges 13 at opposite sides of the tube 12. The tube 12 is formed by the reinforcement threads 16 and 17 of the non-woven texture 15. Accordingly, when a composite material (fiber reinforced resin) employing the tubular fiber structure 10 as a reinforcement base material is used to absorb impacts, for example, when using such a composite material as an energy absorption member for supporting a vehicle bumper, coupling is facilitated and impact energy is efficiently absorbed.

### Second Embodiment

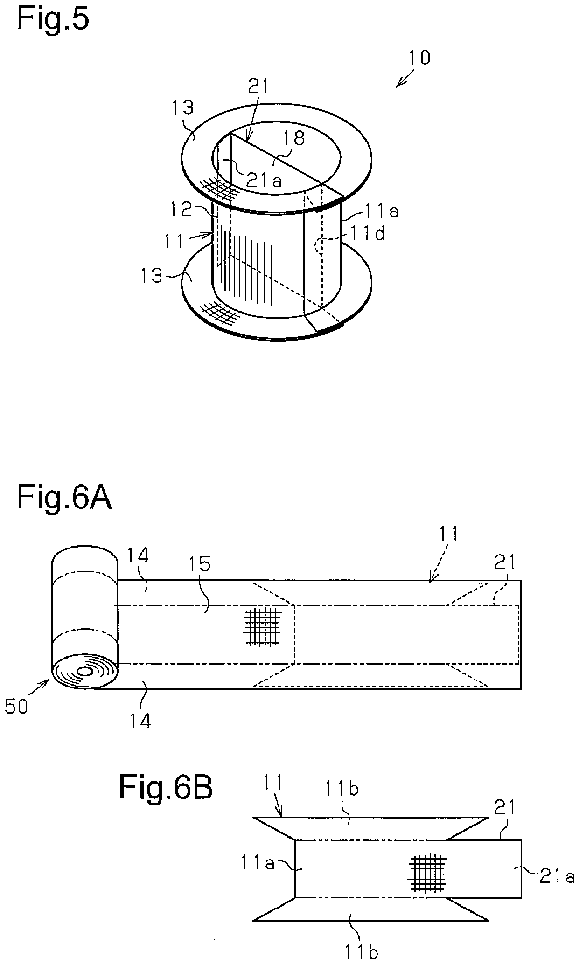

A second embodiment will now be described with reference to Figs. 5 to 7. This embodiment differs from the tubular fiber structure 10 of the first embodiment in that a reinforcement portion 18 formed by a fabric base material 21 is arranged at the inner side of the tube 12. Otherwise, the structure is basically the same as the tubular fiber structure 10 of the first embodiment. Same reference numerals are given to those components that are the same as the corresponding components of the first embodiment. Such components will not be described in detail.

As shown in Fig. 5, the fabric base material 21 of the reinforcement portion 18 is continuous with a rolled inner end 11d of the tube-corresponding portion 11a, which corresponds to the tube 12, in the fabric base material 11 forming the tube 12 and the flanges 13. The fabric base material 21 is arranged so as to extend in the radial direction of the tube 12. The fabric base material 21 includes a fixed portion 21a, which is fixed along the inner surface of the tube 12 at the opposite side of a position continuous with the tube-corresponding portion 11a in the tube 12. The fixed portion 21a is fixed to the inner surface of the tube 12 by an adhesive agent or stitches (not shown).

A method for manufacturing the tubular fiber structure 10 will now be described.

As shown in Figs. 6A and 6B, the fabric base material 11, which forms the tube 12 and the flanges 13, and the fabric base material 21, which forms the reinforcement portion 18, are cut out integrally from the roll 50. The fabric base material 21 is formed continuously with the tube-corresponding portion 11a and has the same width as the tube-corresponding portion 11a. The fabric base material 21 is formed to have a length that is the sum of the inner diameter of the tube 12 and the length of the fixed portion 21a.

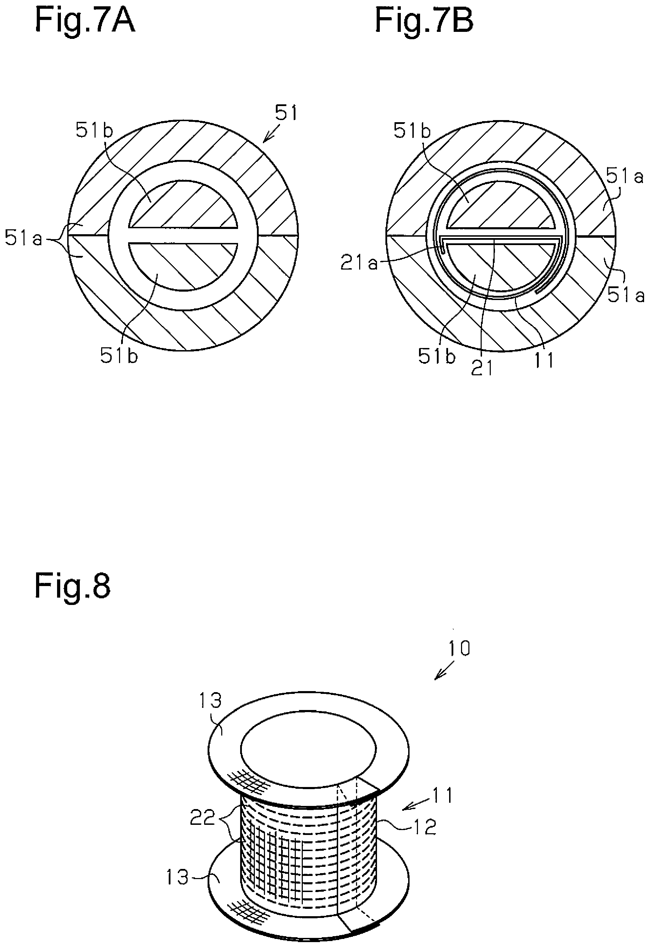

When manufacturing the tubular fiber structure 10, the inner jig 51b of the jig 51 has a structure that differs from the inner jig 51b of the first embodiment. As shown in Fig. 7A, in the jig 51, the outer jig 51a and the inner jig 51b are both formed by two separate pieces. More specifically, the inner jig 51b includes semi-cylinders and a recess in each of the two end surfaces.

Referring to Fig. 7B, when the fabric base material 21 is held between the two inner jigs 51b so that the fixed portion 21a of the fabric base material 21 extends along the circumferential surface of the inner jig 51b, the tube-corresponding portion 11a of the fabric base material 11 is rolled around the circumferential surfaces of the two inner jigs 51b. Further, the outer jig 51a is fitted to the outer side of the tube-corresponding portion 11a of the fabric base material 11, which is rolled around the inner jigs 51b. When the tube-corresponding portions 11a are held between the inner jig 51b and the outer jig 51a, the jig 51 is held by a support device (not shown). Then, in the same manner as the first embodiment, the flange-corresponding portions 11b of the fabric base material 11 held by the jig 51 is shaped with, for example, a manipulator. In Fig. 7B, to ease understanding of the relationship of the jig 51 with the fabric base material 11 and the fabric base material 21, a gap is shown between the jig 51 and the fabric base materials 11 and 21 and between the overlapping portions of the fabric base material 11.

In addition to advantages (1) to (3) of the first embodiment, this embodiment has the advantages described below.
(4) The tubular fiber structure 10 includes the reinforcement portion 18, which is formed by the fabric base material 21, at the inner side of the tube 12. In this structure, when using the tubular fiber structure 10 as an impact absorption composite material, the absorption amount of impact energy may be increased and buckling may be limited as compared with when the reinforcement portion 18 does not exist. Further, when using the tubular fiber structure 10 as a composite material that receives a large aerodynamic force like a turbine blade, deformation caused by aerodynamic force may be limited.
(5) The fabric base material 21 of the reinforcement portion 18 is continuous with the rolled inner end 11d of the tube-corresponding portion 11a of the fabric base material 11, which forms the tube 12 and the flanges 13. With this structure, the reinforcement portion 18 may be formed more easily at a predetermined position than when forming the reinforcement portion 18 with a fabric base material 21 that is separate from the fabric base material 11 before integration with the tube 12.

### Third Embodiment

A third embodiment will now be described with reference to Figs. 8 to 10. This embodiment differs from the first embodiment in that multiple layers of the fabric base material 11 are stacked and sewn together with stitching threads 22 so that the tube 12 is three-dimensional. Same reference numerals are given to those components that are the same as the corresponding components of the first embodiment. Such components will not be described in detail.

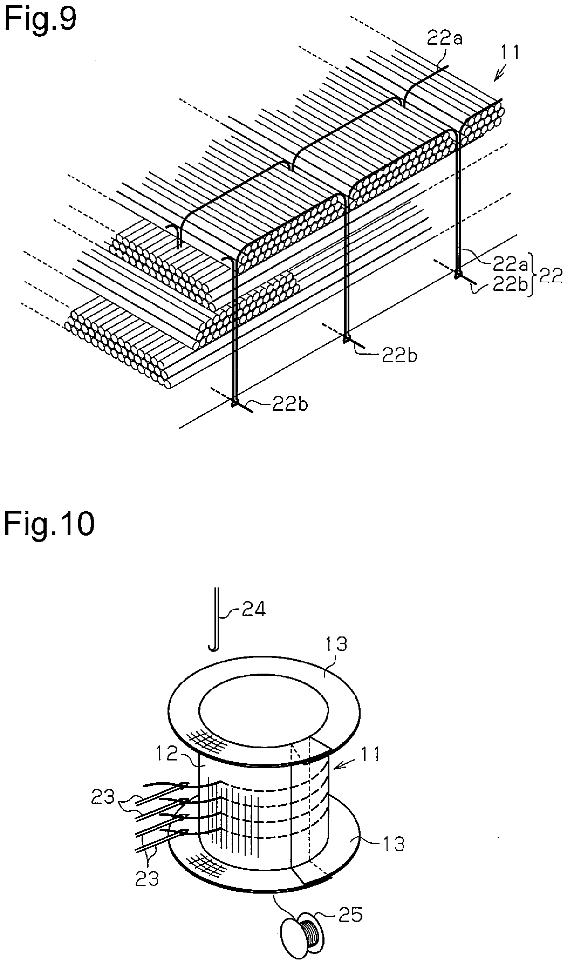

As shown in Figs. 8 and 9, the overlapping layers of the fabric base material 11 at the tube 12 are lock-stitched with the stitching threads 22 so that the tubular fiber structure 10 is three-dimensional. As shown in Fig. 9, the stitching threads 22 include a piercing thread 22a, which is pierced through and returned from portions where the fabric base material 11 is overlapped in layers, and a locking thread 22b, which locks the piercing thread 22a to the fabric base material 11 at portions of the fabric base material 11 where the piercing thread 22a is pierced through and returned. The piercing thread 22a is sewn at predetermined intervals in the circumferential direction of the tube 12. The locking thread 22b is laid out at the inner surface side of the tube 12 parallel to the axial direction of the tube 12. A lockstitch refers to a stitch that uses two threads, namely, a first thread (upper thread) and a second thread (lower thread) and entwines loops of the first thread with the second thread. In this embodiment, the piercing thread 22a corresponds to the first thread, and the locking thread 22b corresponds to the second thread.

The stitching method will now be described. As shown in Fig. 10, the tubular fiber structure 10, which includes the flanges 13 on the two ends of the tube 12, is stitched when supported by a support device (not shown) with the tube 12 extending in the vertical direction.

An insertion device for the piercing thread 22a includes piercing thread insertion needles 23, which are laid out along a single line in the axial direction (vertical direction as viewed in Fig. 10) of the tube 12. The piercing thread insertion needles 23 are simultaneously reciprocated to simultaneously insert the piercing threads 22a. The piercing thread insertion needles 23 insert the piercing threads 22a so that the piercing threads 22a are inserted through the tube 12 from the outer side, looped (not shown) at the inner side, and then returned.

An insertion device for the locking thread 22b includes a single locking thread needle 24. The locking thread needle 24 is arranged at a standby position above the tube 12 and is reciprocally movable through the loops of the piercing threads 22a formed by the piercing thread insertion needs 23 along a single line at the inner side of the tube 12. When moved forth, the locking thread needle 24 passes through the loops of the piercing threads 22a from the standby position. When moved back, the locking thread needle 24 moves with the locking thread 22b hooked to the distal end of the locking thread needle 24 and returns through the loops of the piercing threads 22a with the locking thread 22b. The locking thread 22b is fed from a locking thread feeding unit 25 located below the tube 12. Then, a tension adjustment unit (not shown) functions to pull the piercing threads 22a and tighten the piercing threads 22a, which are inserted into the tube 12 and locked by the locking thread 22b. This completes a single insertion cycle of the piercing threads 22a. Whenever a single insertion cycle of the piercing threads 22a is completed, the tube 12, the piercing thread insertion needles 23, the locking thread needle 24, and the locking thread feeding unit 25 are relatively rotated to sequentially stitch the tube 12 and manufacture the tubular fiber structure 10 shown in Fig. 8. The distal end of the locking thread needle 24 includes a latch (not shown) so that the locking thread needle 24 is not caught in a loop when passing through the loops of the piercing threads 22a.

In addition to advantages (1) to (3) of the first embodiment, this embodiment has the advantages described below.
(6) The overlapped layers of the fabric base material 11 are sewn together with the stitching threads 22 so that the tube 12 is three-dimensional. Thus, in comparison with a structure in which the overlapping layers of the fabric base material 11 is not sewn together with the stitching threads 22, the energy absorption characteristics are improved when using the tubular fiber structure 10 as a composite material for absorbing impacts. Further, when using the tubular fiber structure 10 as a composite material that needs to release heat out of the tube 12, the fibers extending in the thicknesswise direction increase thermal conductivity in the thicknesswise direction and allows for the release of heat from the high-temperature side.
(7) The stitching threads 22, namely, the piercing threads 22a and the locking thread 22b, sew the fabric base material 11 in a lockstitch with the locking thread 22b entwined with the loops of the piercing threads 22a. This restricts easy removal of the stitching threads as compared with a chainstitch that forms continuous chains with loops formed from a single thread.

### Fourth Embodiment

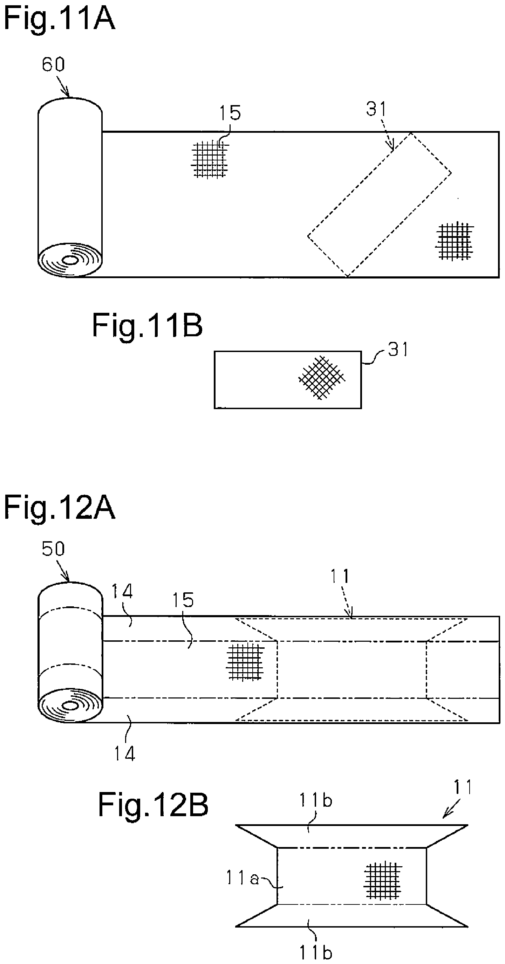

A fourth embodiment will now be described with reference to Figs. 11 and 12. The tubular fiber structure 10 of this embodiment differs from the first embodiment in that the tube 12 is formed from two types of fabric base materials, namely, a first fabric base material 11, in which the threads serving as the reinforcement fibers are laid out at angles of 0 degrees and 90 degrees, and a second fabric base material 31, in which the threads serving as the reinforcement fibers are laid out at angles of +45 degrees and -45 degrees. Same reference numerals are given to those components that are the same as the corresponding components of the first embodiment. Such components will not be described in detail. The "layout angle of a thread" refers to the angle of a direction corresponding to the circumferential direction when the fabric base material is rolled relative to the direction the thread extends.

Referring to Figs. 11A and 11B, the second fabric base material 31, in which the layout angles of the threads serving as the reinforcement fibers are +45 degrees and -45 degrees, is cut out from a roll 60 of the non-woven texture 15, in which the layout angles of the threads serving as the reinforcement fibers are 0 degrees and 90 degrees. The second fabric base material 31 is cut out so that the angle of the longitudinal direction of the second fabric base material 31 is 45 degrees relative to the longitudinal direction of the roll 60. The second fabric base material 31 has the same width as the tube-corresponding portion 11a of the first fabric base material 11 shown in Figs. 12A and 12B, and the second fabric base material 31 has the same length as the tube-corresponding portion 11a.

Referring to Figs. 12A and 12B, the first fabric base material 11, in which the layout angles of the threads serving as the reinforcement fibers are 0 degrees and 90 degrees, is cut out from the roll 50. The roll 50 includes the woven textures 14 at the two widthwise sides and the non-woven texture 15 at the middle region in the widthwise direction between the two woven textures 14. In the same manner as the fabric base material 11 of the first embodiment, the first fabric base material 11 includes the tube-corresponding portion 11a and the flange-corresponding portion 11b.

When manufacturing the tubular fiber structure 10, a jig 51 similar to that of the first embodiment is used. First, the second fabric base material 31 is stacked on the tube-corresponding portion 11a of the first fabric base material 11 and rolled around the inner jig 51b with the second fabric base material 31 located at the outer side. Then, the outer jig 51a is fitted to the outer side of the second fabric base material 31, and the first and second fabric base materials 11 and 31 are held between the outer jig 51a and the inner jig 51b. Further, in the same manner as the first embodiment, the flange-corresponding portions 11b projecting from the two ends of the jig 51 are shaped to form the tubular fiber structure 10. As a result, in the obtained tubular fiber structure 10, a layer in which the layout angles of the threads serving as the reinforcement fibers are 0 degrees and 90 degrees and a layer in which the layout angles of the threads serving as the reinforcement fibers are +45 degrees and -45 degrees are alternately stacked.

In addition to advantages (1) to (3) of the first embodiment, this embodiment has the following advantage.
(8) The tube 12 of the tubular fiber structure 10 includes the first fabric base material 11, in which the layout angles of the threads serving as the reinforcement fibers are 0 degrees and 90 degrees, and the second fabric base material 31, in which the layout angles of the threads serving as the reinforcement fibers are +45 degrees and -45 degrees. This structure increases the rigidity in a plane and limits buckling when forming a composite material in comparison with a structure that forms the tube 12 with only the fabric base material 11, in which the layout angles of the threads serving as the reinforcement fibers are 0 degrees and 90 degrees.

### Fifth Embodiment

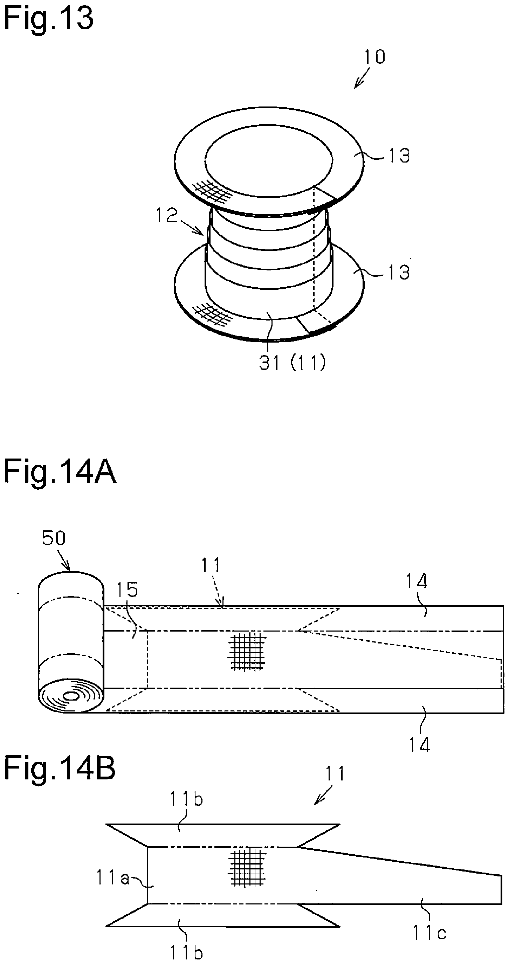

A fifth embodiment will now be described with reference to Figs. 13 to 16. The tubular fiber structure 10 of this embodiment differs from the fourth embodiment in that the tube 12 is tapered. Same reference numerals are given to those components that are the same as the corresponding components of the fourth embodiment. Such components will not be described in detail.

Referring to Fig. 13, the tube 12 has an inner diameter that is fixed and an outer diameter that is changed in a stepped manner. Thus, the thickness of the tubular fiber structure 10 changes in a stepped manner from one end to the other end.

Referring to Figs. 14A and 14B, the first fabric base material 11, which is an element forming the tubular fiber structure 10 and in which the layout angles of the threads serving as the reinforcement fibers are 0 degrees and 90 degrees, is cut out from the roll 50. The roll 50 includes the woven textures 14 at the two widthwise sides and the non-woven texture 15 at the middle region in the widthwise direction between the two woven textures 14. In the same manner as the first fabric base material 11 of the fourth embodiment, the first fabric base material 11 includes the tube-corresponding portion 11a and the flange-corresponding portions 11b. Further, the first fabric base material 11 includes a taper-corresponding portion 11c that is continuous with the tube-corresponding portion 11a, which has a fixed width, and has a gradually decreasing width.

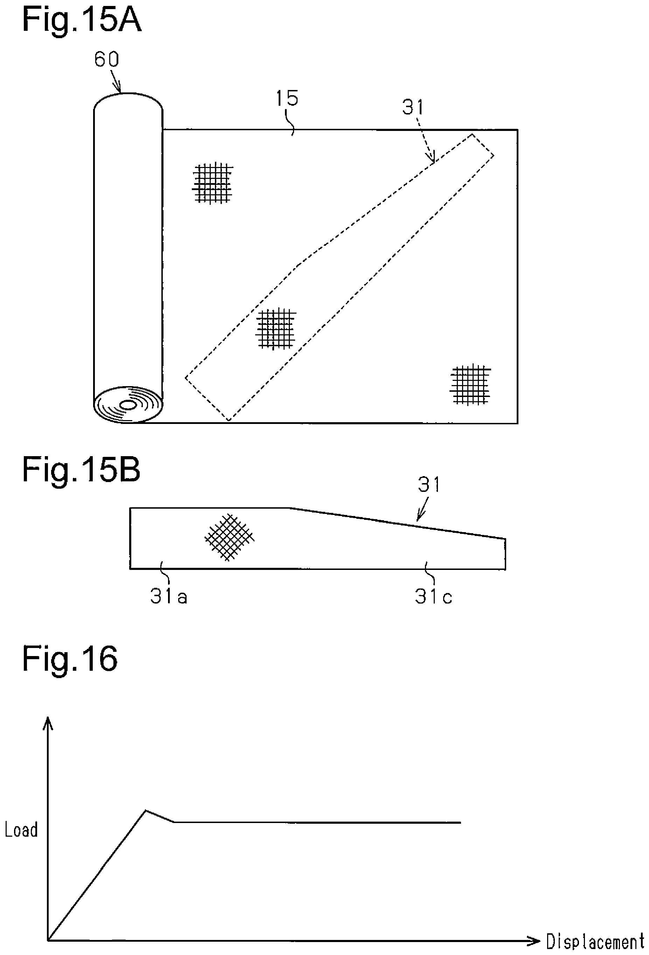

Referring to Figs. 15A and 15B, the second fabric base material 31, which is an element forming the tubular fiber structure 10 and in which the layout angles of the threads serving as the reinforcement fibers are +45 degrees and -45 degrees, is cut out from the roll 60. The roll 60 includes the non-woven texture 15, in which the layout angles of the threads serving as the reinforcement fibers are 0 degrees and 90 degrees. The second fabric base material 31 is cut out so that the angle of the longitudinal direction of the second fabric base material 31 is 45 degrees relative to the longitudinal direction of the roll 60. The second fabric base material 31 includes a tube-corresponding portion 31a and a taper-corresponding portion 31c, which is continuous with the tube-corresponding portion 31a. The tube-corresponding portion 31a has the same width and length as the tube-corresponding portion 11a of the first fabric base material 11. The taper-corresponding portion 31c has the same width and length as the taper-corresponding portion 11c of the first fabric base material 11.

When manufacturing the tubular fiber structure 10, a jig 51 similar to that of the first embodiment is used. First, the tube-corresponding portion 31a and the taper-corresponding portion 31c of the second fabric base material 31 are stacked on the tube-corresponding portion 11a and the taper-corresponding portion 11c of the first fabric base material 11 and rolled around the inner jig 51b with the second fabric base material 31 located at the outer side. Then, the outer jig 51a is fitted to the outer side of the second fabric base material 31, and the first and second fabric base materials 11 and 31 are held between the outer jig 51a and the inner jig 51b. Further, in the same manner as the first embodiment, the flange-corresponding portions 11b projecting from the two ends of the jig 51 are shaped to form the tubular fiber structure 10. As a result, in the tube 12 of the obtained tubular fiber structure 10, a layer in which the layout angles of the threads serving as the reinforcement fibers are 0 degrees and 90 degrees and a layer in which the layout angles of the threads serving as the reinforcement fibers are +45 degrees and - 45 degrees are alternately stacked. Further, the tube 12 has an inner diameter that is fixed and an outer diameter that changes in a stepped manner so that the thickness changes in a stepped manner from one end to the other end.

In addition to advantages (1) to (3) of the first embodiment and advantage (8) of the fourth embodiment, this embodiment has the advantages described below.
(9) The tube 12 of the tubular fiber structure 10 is tapered. Thus, the energy absorption characteristics are improved when using the tubular fiber structure 10 as a composite material for absorbing impacts compared to when the tube 12 has a fixed diameter and a fixed thickness. More specifically, as shown in the graph of Fig. 16, the relationship of load and displacement is such that the displacement gradually increases in proportion to the compression load and then the displacement increases at a fixed load.
(10) The tube 12 has a fixed inner diameter and an outer diameter that changes in a stepped manner to change the thickness in a stepped manner from one end to the other end. This tapers the tube 12. This differs from when rolling a spiral fabric to form a tapered tube 12 having a fixed thickness in that the density of fibers does not decrease toward the basal portion (larger diameter side). Thus, the energy absorption characteristics are further improved. Further, the first and second fabric base materials 11 and 31 may be formed without using a spiral fiber. This facilitates manufacturing compared to when using a spiral fabric.

The embodiments are not limited to the foregoing description. For example, the technology of the present disclosure may be embodied as described below.

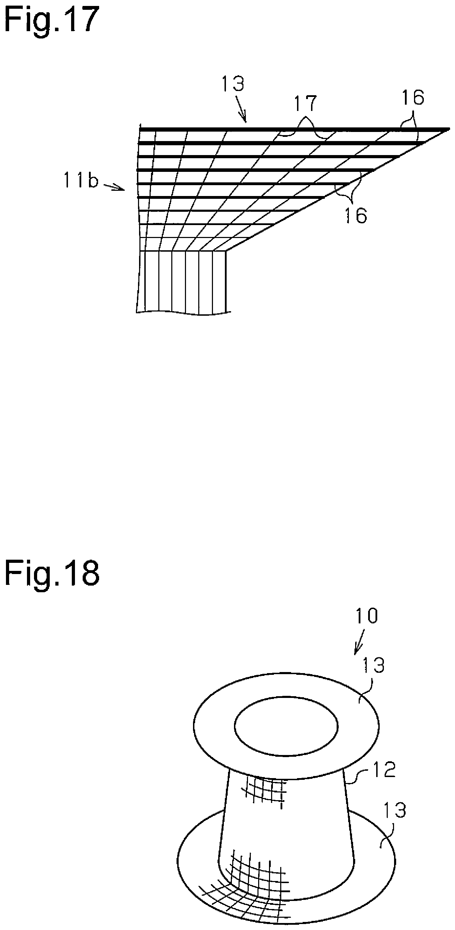

As shown in Fig. 17, among the reinforcement threads 16 and 17 forming the flange-corresponding portions 11b of the fabric base material 11, the threads extending in the circumferential direction when the flanges 13 are formed, namely, the reinforcement threads 16, may be thicker at the radially outer side of the flange 13 (upper side as viewed in Fig. 17). As a result, the radial layout density of the reinforcement threads 16 extending in the circumferential direction of the flange 13 would be greater at outer positions in the radial direction. In contrast, the circumferential layout density of the reinforcement threads 17 extending in the radial direction of the flange 13 is smaller at outer positions in the radial direction. Thus, the difference in the layout densities of the reinforcement threads 16 and 17 at the flange 13 may be limited.

The threads extending in the circumferential direction of the flange 13, namely, the reinforcement threads 16, may be laid out so that the layout interval in the radial direction becomes smaller at outer positions in the radial direction. This also allows the difference in the layout densities of the reinforcement threads 16 and 17 at the flange 13 to be limited.

As shown in Fig. 18, a tubular fiber structure 10 in which the tube 12 is tapered, may have a structure in which the tube 12 has a fixed thickness and the diameter of the tube 12 gradually changes from one end to the other end. This tubular fiber structure 10 may be manufactured by using a spiral fabric as the fabric base material. Fig. 18 does not show overlapping portions of the fabric base material. The term "tapered" includes a case in which the tube has a fixed thickness and a diameter that gradually changes from one end to the other end and also a case in which the tube has a fixed inner diameter and a gradually changing outer diameter that changes the thickness in a stepped manner from one end to the other end.

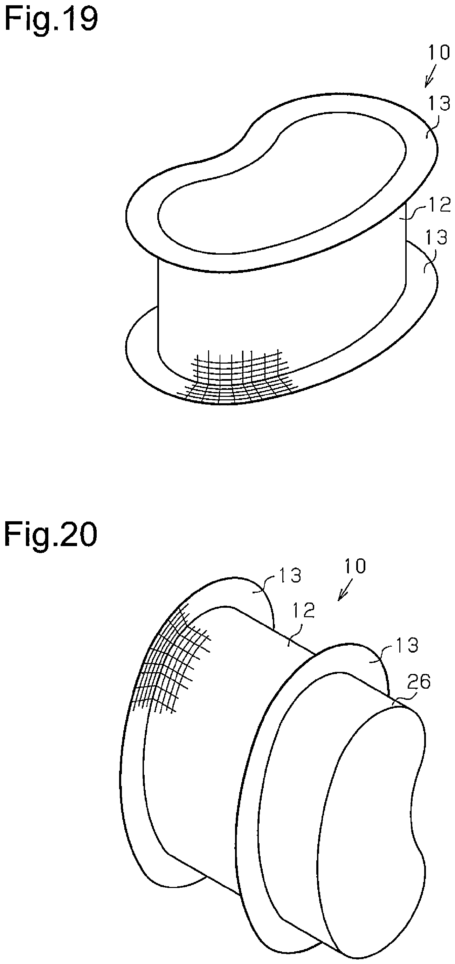

The tube 12 does not have to be tubular or a tapered tube and may be changed in shape in accordance with the usage purpose of the tubular fiber structure 10. For example, when using the tubular fiber structure 10 as a reinforcement for a turbine blade composite material, the tube 12 may be shaped to have a curved surface that partially bulges inward, as shown in Fig. 19. In this case, compared to when formed by a three-axis braid structure, the reinforcement threads forming the tube 12 have fewer crimps. This decreases the undulation in the surface when forming the composite material and limits buckling. Further, the amount of deformation caused by an external force is small. This allows for the flow of air currents to be stabilized. Further, when using a ceramic matrix composite (CMC) as the composite material, breakage may be limited in the CMC, in which the distortion amount until breakage is small (brittle).

As shown in Fig. 20, the tubular fiber structure 10 may include a positioning tube 26 projecting from the flange 13. When forming a composite material with the tubular fiber structure 10, the composite material needs to be fixed when positioned at a predetermined position to couple the composite material to another member. As long as the tubular fiber structure 10 includes the positioning tube 26 that projects from the flange 13, the composite material may be coupled to a coupled portion at the flange 13 with the positioning tube 26 fitted to a positioning projection or positioning recess arranged in the coupled portion. Accordingly, compared to when the positioning tube does not exist, coupling of the composite member to a target position is facilitated.

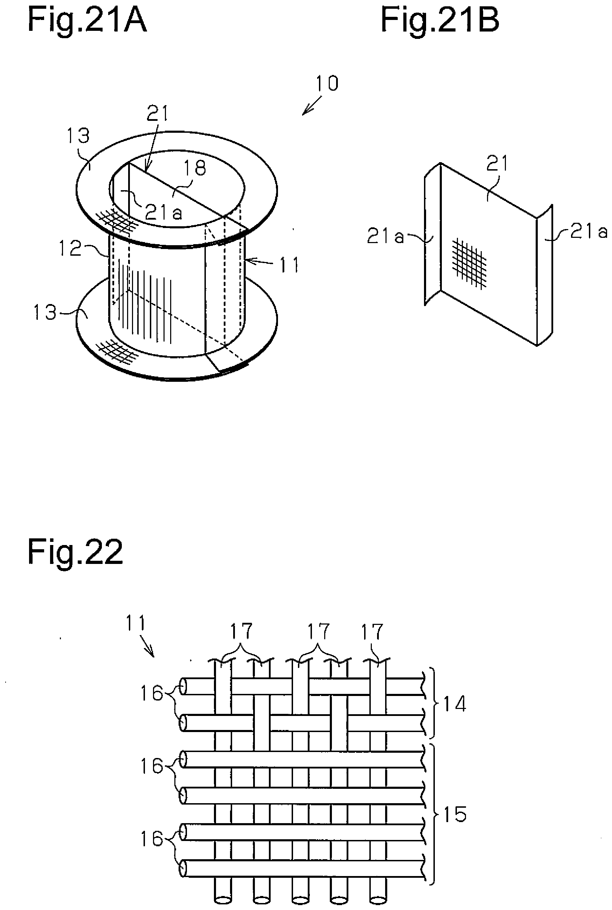

Referring to Fig. 21B, when arranging the reinforcement portion 18, which is formed by the fabric base material 21, at the inner side of the tube 12 like in the second embodiment, the reinforcement portion 18 may be prepared separately from the fabric base material 11 that forms the tube 12 and the flanges 13. In this case, after forming the fabric base material 21 including the fixed portions 21a, as shown in Fig. 21A, the reinforcement portion 18 may be integrated with the tube 12 at the fixed portions 21a. The reinforcement portion 18 and the tube 12 are integrated by an adhesive agent or by stitches. In this case, after the formation of the tubular fiber structure 10, the reinforcement portion 18 may be coupled when necessary.

In the fabric base material 11 including the woven texture 14 and the non-woven texture 15, the structure holding the reinforcement threads 16 and 17 of the non-woven texture 15 at predetermined positions does not have to be a structure that forms a woven texture together with the auxiliary threads 16a and 17a. For example, as shown in Fig. 22, the reinforcement threads 16 and the reinforcement threads 17 may be adhered with a binder at the intersections. The intersections do not all have to be adhered with the binder as long as the shape may be sustained when handling the tubular fiber structure 10.

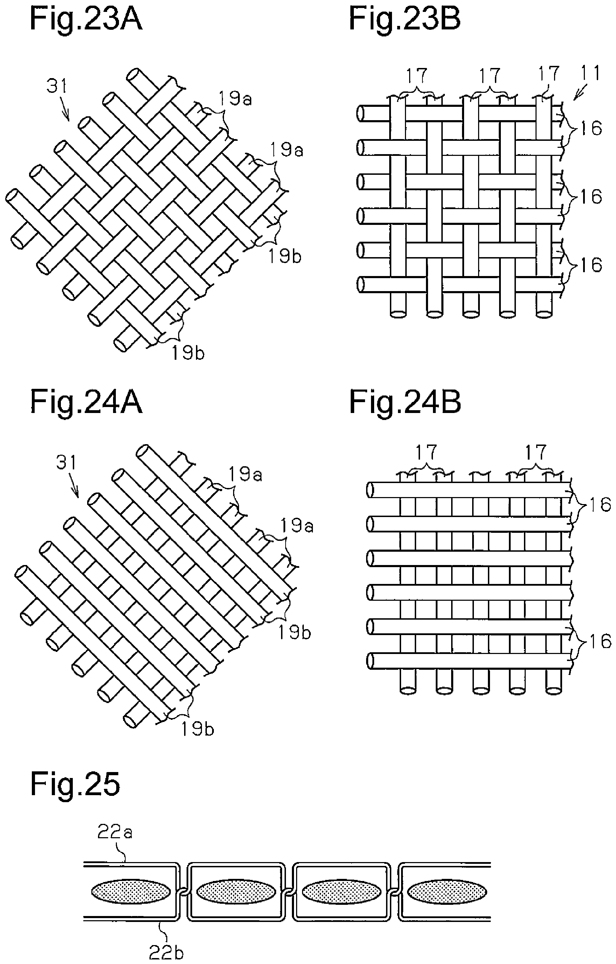

The fabric base material 11 does not have to include the tube-corresponding portion 11a, which is formed by the non-woven texture 15 of the reinforcement threads 16 and 17, and the flange-corresponding portions 11b, which are formed by the woven texture 14 of the reinforcement threads 16 and 17. For example, in the fourth embodiment, the fabric base material 11 may be cut out from the roll shown in Fig. 23B that is plain-weaved by only the reinforcement threads 16 and 17. From the same roll, the fabric base material 31 shown in Fig. 23A may be cut out in which reinforcement threads 19a are laid out at an angle of +45 degrees and reinforcement threads 19b are laid out an angle of -45 degrees.

In the fourth embodiment and the fifth embodiment, the second fabric base material 31 shown in Fig. 24A formed by reinforcement threads 19a laid out at an angle of +45 degrees and reinforcement threads 19b laid out an angle of -45 degrees may be cut out from a roll shown in Fig. 24B that is formed by adhering only the reinforcement threads 16 and 17 with a binder. The intersections of the reinforcement threads 16 and 17 do not all have to be adhered with the binder as long as the shape may be sustained when handling the tubular fiber structure 10.

In the lockstitch formed by the stitching threads 22, the locking thread 22b that corresponds to the lower thread does not have to extend straight. For example, like a typical lockstitch shown in Fig. 25, the piercing thread 22a, which corresponds to the upper thread, and the locking thread 22b are each returned at the middle of the fabric base material 11 in the thicknesswise direction so that the seams are the same at the upper and lower sides and the seams are each independent.

When using fibers, such as glass fibers or carbon fibers, that are non-water-absorptive and have high strength as the stitching threads 22, the energy absorption characteristics are improved as compared with when using organic fibers that are water-absorptive.

Preferably, ceramic fibers are used as the reinforcement fibers and the stitching threads 22 when using the tubular fiber structure 10 with a turbine blade. The composite material is CMC. Thus, the matrix contracts greatly during molding, and cracks easily form, especially, at corners. However, when the structure is three-dimensional, deformation resulting from contraction is reduced, and cracks formed during molding are limited.

The reinforcement portion 18 does not have to be a plate-like structure that extends in the radial direction of the tube 12. For example, the reinforcement portion 18 may be formed by a fabric base material that is bent in an undulated manner or be formed by rolling a fabric base material in a tubular manner.

The tubular fiber structure 10 is not limited to an energy absorption member that supports a vehicle bumper or a turbine plate and may be used as a reinforcement for a fiber reinforced composite material used for a different purpose.

## Claims

1. A tubular fiber structure (10) comprising:
a tube (12); and
a flange (13) located on at least one side of the tube (12);
wherein the tubular fiber structure (10) is formed by shaping a fabric base material (11; 11, 31) that is rolled; and
the fabric base material is formed by threads laid out within the fabric base material to extend at least in two directions;
a portion (11b) of the fabric base material (11) forming the flange (13) is formed by a woven texture (14) with woven intersections of reinforcement threads (16, 17) laid out within the fabric at 0 degrees and 90 degrees, respectively,
**characterized in that**
in the flange (13) auxiliary threads (17a) are laid out within the fabric at 90 degrees adjacent to the reinforcement threads (17) to form woven portions with the reinforcement threads (16), and
**in that** in the flange (13) said reinforcement threads (16) extend continuously over the entire circumference in a circumferential direction and laid out in radial direction, and
**in that** the portion (lib) is bent and the intervals of the reinforcement threads (17) and the auxiliary threads (17a) widen toward outer sides in the radial direction of the tube (12) to form the flange (13), wherein overlapping sections of the portion (lib) are fixed by an adhesive or by stitches.

2. The tubular fiber structure (10) according to claim 1,
wherein a tube corresponding portion (11a) of the fabric base material (11) forming the tube (12) is formed by a non-woven texture (15), in which the reinforcement threads (16) are all laid out along the same plane at the same side of the reinforcement threads (17), and in which
in the tube (12) auxiliary threads (16a) are laid out adjacent to the reinforcement threads (16) at an angle of 0 degrees within the fabric to alternately form woven portions with the reinforcement threads (17) and the auxiliary threads (17a), and in which
in the tube (12) the auxiliary threads (17a) are laid out adjacent to the reinforcement threads (17) at an angle of 90 degrees within the fabric to alternately form woven portions within the reinforcement threads (16) and the auxiliary threads (16a).

3. The tubular fiber structure (10) according to claim 2, wherein
the tube-corresponding portion (11a) includes a rolled inner end (lid) located at a radially inner side when the tube-corresponding portion (11a) is rolled to form the tube (12), and
a fabric base material (21) is continuous with the rolled inner end (lid) and is arranged so as to extend in the radial direction of the tube (12) to form a reinforcement portion (18) at an inner side of the tube (12).

4. The tubular fiber structure (10) according to any one of claims 1 to 3, wherein the tube (12) is formed to be three-dimensional by sewing together overlapping layers of the fabric base material (11) with a stitching thread (22).

5. The tubular fiber structure (10) according to any one of claims 1 to 4, wherein a fabric base material forming the tube (12) includes a first fabric base material (11), in which said threads serving as reinforcement fibers are laid out at angles of 0 degrees and 90 degrees, and a second fabric base material (31), in which said threads serving as reinforcement fibers are laid out at angles of +45 degrees and -45 degrees.

6. The tubular fiber structure (10) according to any one of claims 1 to 5, wherein
the threads (16) located at outer positions in the radial direction of the flange (13) are thicker.

7. The tubular fiber structure (10) according to any one of claims 1 to 5, wherein
the threads (16) are laid out in intervals that become smaller at outer positions in the radial direction.

8. The tubular fiber structure (10) according to any one of claims 1 to 7, wherein the tube (12) is tapered.

9. The tubular fiber structure (10) according to claim 8, wherein the tube (12) has a thickness that changes in a stepped manner from one end to another end of the tube (12).

10. The tubular fiber structure (10) according to any one of claims 1 to 9, further comprising a positioning tube (26) that projects from the flange (13).

11. A fiber reinforced composite material comprising the tubular fiber structure (10) according to any one of claims 1 to 10 as a reinforcement.

## Patentansprüche

1. Rohrförmige Faserstruktur (10), mit:
einem Rohr (12); und
einem Flansch (13), der sich auf mindestens einer Seite des Rohrs (12) befindet;
wobei die rohrförmige Faserstruktur (10) durch Formen eines Gewebegrundmaterials (11; 11, 31) gebildet wird, das gerollt wird; und
das Gewebegrundmaterial durch Fäden gebildet ist, die innerhalb des Gewebegrundmaterials angeordnet sind, um sich in mindestens zwei Richtungen zu erstrecken;
ein Abschnitt (11b) des Gewebegrundmaterials (11), der den Flansch (13) bildet, durch ein gewebtes Gefüge (14) mit gewebten Kreuzpunkten von Verstärkungsfäden (16, 17) gebildet ist, die innerhalb des Gewebes bei 0 Grad bzw. 90 Grad angeordnet sind,
**dadurch gekennzeichnet, dass**
in dem Flansch (13) Hilfsfäden (17a) innerhalb des Gewebes mit 90 Grad neben den Verstärkungsfäden (17) angeordnet sind, um mit den Verstärkungsfäden (16) gewebte Abschnitte zu bilden, und
dass sich in dem Flansch (13) die Verstärkungsfäden (16) durchgehend über den gesamten Umfang in Umfangsrichtung erstrecken und in radialer Richtung angeordnet sind, und
dass der Abschnitt (11b) gebogen ist und sich die Intervalle der Verstärkungsfäden (17) und der Hilfsfäden (17a) in radialer Richtung des Rohrs (12) zu den Außenseiten hin erweitern, um den Flansch (13) zu bilden, wobei überlappende Abschnitte des Abschnitts (11b) durch einen Klebstoff oder durch Stiche fixiert sind.

2. Rohrförmige Faserstruktur (10) nach Anspruch 1,
wobei ein rohrentsprechender Abschnitt (11a) des das Rohr (12) bildenden Gewebegrundmaterials (11) durch ein Vliesgefüge (15) gebildet ist, in dem die Verstärkungsfäden (16) alle entlang derselben Ebene auf derselben Seite der Verstärkungsfäden (17) angeordnet sind, und in der
in dem Rohr (12) Hilfsfäden (16a) neben den Verstärkungsfäden (16) in einem Winkel von 0 Grad innerhalb des Gewebes angeordnet sind, um abwechselnd mit den Verstärkungsfäden (17) und den Hilfsfäden (17a) gewebte Abschnitte zu bilden, und in der
in dem Rohr (12) die Hilfsfäden (17a) neben den Verstärkungsfäden (17) in einem Winkel von 90 Grad innerhalb des Gewebes angeordnet sind, um abwechselnd innerhalb der Verstärkungsfäden (16) und der Hilfsfäden (16a) gewebte Abschnitte zu bilden.

3. Rohrförmige Faserstruktur (10) nach Anspruch 2, wobei
der rohrentsprechende Abschnitt (11a) ein gerolltes inneres Ende (11d) aufweist, das an einer radial inneren Seite angeordnet ist, wenn der rohrentsprechende Abschnitt (11a) gerollt wird, um das Rohr (12) zu bilden, und
ein Gewebegrundmaterial (21) mit dem gerollten inneren Ende (11d) zusammenhängend ist und angeordnet ist, um sich in der radialen Richtung des Rohrs (12) zu erstrecken, um einen Verstärkungsabschnitt (18) an einer Innenseite des Rohrs (12) zu bilden.

4. Rohrförmige Faserstruktur (10) nach einem der Ansprüche 1 bis 3, wobei das Rohr (12) dreidimensional geformt wird, indem überlappende Lagen des Gewebegrundmaterials (11) mit einem Nähfaden (22) zusammengenäht werden.

5. Rohrförmige Faserstruktur (10) nach einem der Ansprüche 1 bis 4, wobei ein das Rohr (12) bildendes Gewebegrundmaterial ein erstes Gewebegrundmaterial (11), in dem die als Verstärkungsfasern dienenden Fäden in Winkeln von 0 Grad und 90 Grad angeordnet sind, und ein zweites Gewebegrundmaterial (31) aufweist, in dem die als Verstärkungsfasern dienenden Fäden in Winkeln von +45 Grad und -45 Grad angeordnet sind.

6. Rohrförmige Faserstruktur (10) nach einem der Ansprüche 1 bis 5, wobei
die Fäden (16), die sich an in radialer Richtung des Flansches (13) äußeren Positionen befinden, dicker sind.

7. Rohrförmige Faserstruktur (10) nach einem der Ansprüche 1 bis 5, wobei
die Fäden (16) in Intervallen angeordnet sind, die an den in radialer Richtung äußeren Positionen kleiner werden.

8. Rohrförmige Faserstruktur (10) nach einem der Ansprüche 1 bis 7, wobei das Rohr (12) kegelförmig ist.

9. Rohrförmige Faserstruktur (10) nach Anspruch 8, wobei das Rohr (12) eine Dicke hat, die sich von einem Ende zum anderen Ende der Röhre (12) stufenweise ändert.

10. Rohrförmige Faserstruktur (10) nach einem der Ansprüche 1 bis 9, ferner mit einem Positionierungsrohr (26), das aus dem Flansch (13) vorsteht.

11. Faserverstärktes Verbundmaterial, das die rohrförmige Faserstruktur (10) nach einem der Ansprüche 1 bis 10 als Verstärkung aufweist.

## Revendications

1. Structure fibreuse tubulaire (10) comprenant :
un tube (12) ; et
une bride (13) située sur au moins un côté du tube (12) ;
dans laquelle la structure fibreuse tubulaire (10) est formée en façonnant un matériau de base en tissu (11 ; 11, 31) qui est enroulé ; et
le matériau de base en tissu est formé par des fils disposés à l'intérieur du matériau de base en tissu de manière à s'étendre au moins dans deux directions ;
une partie (11b) du matériau de base en tissu (11) formant la bride (13) est formée par une texture tissée (14) avec des intersections tissées de fils de renforcement (16, 17) disposés à l'intérieur du tissu à 0 degré et 90 degrés, respectivement,
**caractérisée en ce que**
dans la bride (13), des fils auxiliaires (17a) sont disposés à l'intérieur du tissu à 90 degrés, de manière adjacente aux fils de renforcement (17), pour former des parties tissées avec les fils de renforcement (16), et
**en ce que** dans la bride (13), lesdits fils de renforcement (16) s'étendent en continu sur toute la circonférence dans une direction circonférentielle et sont disposés dans une direction radiale, et
**en ce que** la partie (11b) est pliée et les intervalles des fils de renforcement (17) et des fils auxiliaires (17a) s'élargissent vers les côtés extérieurs dans la direction radiale du tube (12), pour former la bride (13), dans laquelle des sections se chevauchant de la partie (11b) sont fixées par un adhésif ou par des points de couture.

2. Structure fibreuse tubulaire (10) selon la revendication 1,
dans laquelle une partie correspondant au tube (11a) du matériau de base en tissu (11) formant le tube (12) est formée par une texture non tissée (15), dans laquelle les fils de renforcement (16) sont tous disposés sur le même plan du même côté des fils de renforcement (17), et dans laquelle
dans le tube (12), des fils auxiliaires (16a) sont disposés de manière adjacente aux fils de renforcement (16) selon un angle de 0 degré à l'intérieur du tissu, pour former des parties tissées en alternance avec les fils de renforcement (17) et les fils auxiliaires (17a), et dans laquelle
dans le tube (12) les fils auxiliaires (17a) sont disposés de manière adjacente aux fils de renforcement (17) selon un angle de 90 degrés à l'intérieur du tissu pour former des parties tissées en alternance avec des fils de renforcement (16) et des fils auxiliaires (16a).

3. Structure fibreuse tubulaire (10) selon la revendication 2, dans laquelle
la partie correspondant au tube (11a) comporte une extrémité intérieure enroulée (11d) située sur un côté radialement intérieur lorsque la partie correspondant au tube (11a) est enroulée pour former le tube (12), et
un matériau de base en tissu (21) est continu avec l'extrémité intérieure enroulée (11d) et est agencé de sorte à s'étendre dans la direction radiale du tube (12) pour former une partie de renforcement (18) sur un côté intérieur du tube (12).

4. Structure fibreuse tubulaire (10) selon l'une quelconque des revendications 1 à 3, dans laquelle le tube (12) est formé pour être tridimensionnel en cousant ensemble des couches se chevauchant du matériau de base en tissu (11) avec un fil à coudre (22).

5. Structure fibreuse tubulaire (10) selon l'une quelconque des revendications 1 à 4, dans laquelle un matériau de base en tissu formant le tube (12) comporte un premier matériau de base en tissu (11) où lesdits fils servant de fibres de renforcement sont disposés selon des angles de 0 degré et de 90 degrés, et un second matériau de base en tissu (31) où lesdits fils servant de fibres de renforcement sont disposés selon des angles de +45 degrés et de -45 degrés.

6. Structure fibreuse tubulaire (10) selon l'une quelconque des revendications 1 à 5, dans laquelle
les fils (16) situés à des positions extérieures dans la direction radiale de la bride (13) sont plus épais.

7. Structure fibreuse tubulaire (10) selon l'une quelconque des revendications 1 à 5, dans laquelle
les fils (16) sont disposés par intervalles de plus en plus petits à des positions extérieures dans la direction radiale.

8. Structure fibreuse tubulaire (10) selon l'une quelconque des revendications 1 à 7, dans laquelle le tube (12) est conique.

9. Structure fibreuse tubulaire (10) selon la revendication 8, dans laquelle le tube (12) a une épaisseur qui change de manière échelonnée d'une extrémité à une autre extrémité du tube (12).

10. Structure fibreuse tubulaire (10) selon l'une quelconque des revendications 1 à 9, comprenant en outre un tube de positionnement (26) qui fait saillie à partir de la bride (13).

11. Matériau composite renforcé par des fibres comprenant la structure fibreuse tubulaire (10) selon l'une quelconque des revendications 1 à 10 en tant que renforcement.
